# EUROPÄISCHE PATENTSCHRIFT

(11) **EP 3 616 821 B1**
(45) Veröffentlichungstag und Bekanntmachung des Hinweises auf die Patenterteilung: **27.09.2023**
(21) Anmeldenummer: 18191701.4
(22) Anmeldetag: 30.08.2018
(51) Int. Cl.: B23K 9/095

(54) **BAUTEILERKENNUNG FÜR EIN SCHWEISSGERÄT ÜBER EIN GEPAARTES MOBILES KOMMUNIKATIONSGERÄT**
COMPONENT DETECTION FOR A WELDING APPARATUS OVER A PAIRED MOBILE COMMUNICATION DEVICE
IDENTIFICATION DE COMPOSANT POUR UN APPAREIL DE SOUDAGE À L'AIDE D'UN APPAREIL DE COMMUNICATION MOBILE APPARIÉ

(43) Veröffentlichungstag der Anmeldung: 04.03.2020
(73) Patentinhaber: EWM AG, 56271 Mündersbach (DE)
(72) Erfinder: Szczesny, Michael, 56271 Mündersbach (DE)
(74) Vertreter: Cohausz & Florack

(56) Entgegenhaltungen:
- EP-A1- 2 468 443
- EP-A2- 3 296 051

## Beschreibung

Die Erfindung betrifft ein Verfahren zum Erhalten von Schweißvorgangs-Daten sowie ein für dieses Verfahren verwendbares System mit mindestens einer Steuereinrichtung.

Im Zuge gestiegener Anforderungen an geschweißte Bauteile, sind in der Vergangenheit verschiedene Anstrengungen unternommen worden, um die Zuverlässigkeit von Schweißverbindungen verbessern und Schweißvorgänge verbessern und überwachen zu können.

Beispielsweise sind Schweißgeräte mit elektronischem Speicher bekannt, in denen Schweißparameter für verschiedene typische Schweißverbindungen (z.B. Stumpf-Stoß, T-Stoß etc.) bzw. für verschiedene Materialien (z.B. Stähle, Aluminium etc.) hinterlegt sind, so dass ein Bediener des Schweißgeräts diese bei Bedarf abrufen kann.

Beim Schweißen ergibt sich häufig die Situation, dass der Bediener Schweißvorgänge an verschiedenen Bauteilen oder auch mehrere Schweißvorgänge an einem Bauteil vorzunehmen hat, wobei die einzelnen Schweißvorgänge verschiedene Schweißparameter erfordern bzw. in einer bestimmten Reihenfolge gemäß einem sogenannten Schweißfolgeplan durchzuführen sind.

Um bei einer solch komplexen Aufgabe zuverlässig alle Schweißnähte in der richtigen Reihenfolge und mit den richtigen Schweißparametern durchzuführen, bedarf es seitens des Bedieners des Schweißgeräts einer hohen Sorgfalt und Erfahrung. Natürlich kann es bei einer solchen Aufgabe auch zu Fehlern kommen, so dass die Schweißverbindung bzw. das geschweißte Bauteil die vorgegebenen Anforderungen unter Umständen nicht erfüllt.

Aus der EP 3 296 051 A1 ist ein System bekannt, mit dem für ein zu schweißendes Bauteil ein vorgegebener Bauteil-Datensatz abgerufen werden kann, der einen Schweißfolgeplan mit Parameterwerten für mehrere an dem Bauteil vorzunehmende Schweißvorgänge enthält und die automatische Einstellung des Schweißgeräts an den jeweiligen Schweißvorgang erlaubt.

Aus der EP 2 468 443 A1 (Basis für den Oberbegriff der unabhängigen Ansprüche) sind ein System und ein Verfahren zum Kommunizieren und Verwalten von Schweißinformationen bekannt, wobei insbesondere Schweißparameter ausgelesen werden.

Bei komplexen zu schweißenden Bauteilen stellt sich dem Bediener eines Schweißgeräts häufig das Problem, die Positionen der zu erzeugenden Schweißpunkte bzw. -nähte in der richtigen Reihenfolge am Schweißgerät zu identifizieren.

Vor diesem Hintergrund liegt der vorliegenden Erfindung die Aufgabe zu Grunde, das Schweißen weiter zu vereinfachen und die Fehleranfälligkeit weiter zu reduzieren. Diese Aufgabe wird erfindungsgemäß gelöst durch ein Verfahren zum Erhalten von Schweißvorgangs-Daten, insbesondere ausgeführt durch eine Steuereinrichtung einer Vorrichtung oder eines Systems, bei dem eine Gerätepaarungsinformation über die Zuordnung eines mobilen Kommunikationsgeräts, insbesondere eines Mobiltelefons, zu einem Schweißgerät, erhalten wird, bei dem über eine drahtlose Kommunikationsverbindung mit dem mobilen Kommunikationsgerät Bilddaten empfangen werden, bei dem die empfangenen Bilddaten analysiert werden, um ein in den Bilddaten sichtbares zu schweißendes Bauteil zu identifizieren, und bei dem Schweißvorgangs-Daten für einen mit dem Schweißgerät durchzuführenden Schweißvorgang erhalten werden, wobei der Schweißvorgang gemäß einem vorgegebenen Schweißplan an dem identifizierten Bauteil durchzuführen ist.

Das Verfahren ermöglicht es, ein mobiles Kommunikationsgerät mit einem Schweißgerät zu paaren und auf diesem Wege von dem mobilen Kommunikationsgerät aufgenommene Bilddaten zu erhalten, um darin ein zu schweißendes Bauteil zu identifizieren und Daten eines an diesem Bauteil durchzuführenden Schweißvorgangs zu erhalten. Die automatische Erkennung des Bauteils in den Bilddaten erleichtert dem Bediener die Identifizierung des Bauteils und der zugehörigen Schweißvorgangs-Daten für einen an dem identifizierten Bauteil durchzuführenden Schweißvorgang.

Der Schweißvorgang ist gemäß einem vorgegebenen Schweißplan an dem identifizierten Bauteil durchzuführen. Bei dem Schweißplan kann es sich beispielsweise um einen Schweißfolgeplan handeln, der mehrere an einem Bauteil durchzuführende Schweißvorgänge vorgibt, insbesondere Schweißvorgangs-Daten für mehrere an dem Bauteil in einer vorgegebenen Reihenfolge durchzuführende Schweißvorgänge umfasst. Der Schweißplan, insbesondere Schweißfolgeplan, ist vorzugsweise auf einem Speicher gespeichert, auf den eine das Verfahren ausführende Steuereinrichtung zugreifen kann, um den Schweißplan oder Informationen über einen oder mehrere an dem identifizierten Bauteil durchzuführende Schweißvorgänge zu erhalten.

Die Paarung eines mobilen Kommunikationsgeräts mit dem Schweißgerät, d.h. deren Zuordnung zueinander, ermöglicht den flexiblen Einsatz von mobilen Kommunikationsgeräten zur Erfassung der Bilddaten. Vorzugsweise handelt es sich bei dem mobilen Kommunikationsgerät um ein Mobiltelefon, insbesondere um ein Smartphone, beispielsweise um das Smartphone des Bedieners des Schweißgeräts.

Es wurde erkannt, dass fest im Schweißgerät verbaute oder fest damit verbundene Kameras oder Scanner zu unflexibel sind und unter den typischen Umgebungsbedingungen am Schweißort leicht verunreinigt oder beschädigt werden können. Demgegenüber sind mobile Kommunikationsgeräte wie zum Beispiel Mobiltelefone klein und handlich, so dass sie sich ohne weiteres in einer Tasche der Bekleidung verstauen und auf diese Weise schützen lassen. Zudem führen Bediener eines Schweißgeräts heutzutage häufig ohnehin ein Smartphone bei sich. Auf einem solchen Smartphone kann beispielsweise eine bestimmte Anwendung (App) installiert sein, die die Übertragung aufgenommener Bilddaten an die Steuereinrichtung, insbesondere einen Server, bewirkt.

Die Bilddaten werden über eine drahtlose Kommunikationsverbindung mit dem mobilen Kommunikationsgerät empfangen. Unter einer drahtlosen Kommunikationsverbindung wird vorliegend eine Kommunikationsverbindung verstanden, die zumindest streckenweise drahtlos erfolgt. Die drahtlose Kommunikationsverbindung kann insbesondere eine Bluetooth- oder WLAN-Verbindung oder auch eine Mobilfunk-Datenverbindung umfassen. Im Fall einer Mobilfunk-Datenverbindung ist beispielsweise die Verbindungsstrecke zwischen dem mobilen Kommunikationsgerät und der Empfängerantenne des Mobilfunknetzes drahtlos. Die weitere Kommunikationsverbindung von der Empfängerantenne bis zur Steuereinrichtung, beispielsweise über einen Internet-Einspeisepunkt eines Mobilfunkbetreibers und einen Internetanschluss, an dem die Steuereinrichtung angeschlossen ist, kann ganz oder teilweise kabelgebunden erfolgen.

Die Analyse der empfangenen Bilddaten kann insbesondere mittels bildverarbeitungstechnischer Verfahren erfolgen. Eine Identifizierung des in den Bilddaten sichtbaren Bauteils kann beispielsweise eine Formerkennung oder die Erkennung eines auf dem Bauteil angebrachten und in den Bilddaten sichtbaren Codes, z.B. Barcodes, umfassen.

Die zuvor genannte Aufgabe wird weiterhin gelöst durch ein System, umfassend mindestens eine Steuereinrichtung, mit einer Gerätepaarungseinheit, eingerichtet zum Erhalten einer Gerätepaarungsinformation über die Zuordnung eines mobilen Kommunikationsgeräts, insbesondere eines Mobiltelefons, zu einem Schweißgerät, mit einer Empfangseinheit, eingerichtet zum Empfangen von Bilddaten über eine drahtlose Kommunikationsverbindung, mit einer Bildanalyseeinheit, eingerichtet zum Analysieren von der Empfangseinheit empfangener Bilddaten, um ein in den Bilddaten sichtbares zu schweißendes Bauteil zu identifizieren, und mit einer Schweißvorgangsdatenerhalteeinheit, eingerichtet zum Erhalten von Schweißvorgangsdaten für einen mit dem Schweißgerät durchzuführenden Schweißvorgang, der gemäß einem vorgegebenen Schweißplan an dem identifizierten Bauteil durchzuführen ist.

Das System umfasst mindestens eine Steuereinrichtung. Bei der Steuereinrichtung kann es sich beispielsweise um einen Server handeln, an den über ein Netzwerk ein oder mehrere Schweißgeräte angeschlossen sind.

Die Empfangseinheit kann eine Schnittstelle zu einem Netzwerk umfassen, beispielsweise zu einem lokalen Netzwerk wie zum Beispiel einem WLAN-Netzwerk, oder auch zu einem öffentlichen Netzwerk wie dem Internet. Alternativ kann die Empfangseinheit auch eine Schnittstelle zur Herstellung einer Peer-to-Peer-Verbindung zwischen dem mobilen Kommunikationsgerät und der Steuereinrichtung umfassen, beispielsweise zur Herstellung einer Bluetooth-Verbindung.

Die Gerätepaarungseinheit, die Empfangseinheit, die Bildanalyseeinheit und die Schweißvorgangsdatenerhalteeinheit können als separate Komponenten oder auch als Module eines Computerprogramms implementiert sein, das auf der Steuereinrichtung läuft.

Im Folgenden werden verschiedene Ausführungsformen des Verfahrens und des Systems beschrieben, wobei die einzelnen Ausführungsformen jeweils unabhängig voneinander sowohl für das Verfahren als auch für das System gelten. Zudem sind die Ausführungsformen miteinander kombinierbar.

Bei einer Ausführungsform umfasst das Erhalten der Gerätepaarungsinformation: Erhalten einer Mobilgerät-Kennung, die einem mobilen Kommunikationsgerät zugeordnet ist, Erhalten einer Schweißgerät-Kennung, die einem Schweißgerät zugeordnet ist, und Erzeugen einer Gerätepaarungsinformation durch Verknüpfen der Mobilgerät-Kennung und der Schweißgerät-Kennung. Bei einer entsprechenden Ausführungsform des Systems ist die Gerätepaarungseinheit eingerichtet zum Erhalten einer Mobilgerät-Kennung, die einem mobilen Kommunikationsgerät zugeordnet ist, zum Erhalten einer Schweißgerät-Kennung, die einem Schweißgerät zugeordnet ist und zum Erzeugen einer Gerätepaarungsinformation durch Verknüpfen der Mobilgerät-Kennung und der Schweißgerät-Kennung.

Durch die Mobilgerät-Kennung und die Schweißgerät-Kennung werden das entsprechende mobile Kommunikationsgerät bzw. das entsprechende Schweißgerät eindeutig identifiziert. Durch ein Verknüpfen der beiden Kennungen kann damit eine eindeutige Zuordnung des mobilen Kommunikationsgeräts zu dem Schweißgerät erreicht werden, wodurch die beiden Geräte gepaart werden. Das Verknüpfen kann beispielsweise dadurch erfolgen, dass die Mobilgerät-Kennung und die Schweißgerät-Kennung relational zueinander gespeichert werden, beispielsweise in einer relationalen Datenbank oder in einer Tabelle.

Bei einer weiteren Ausführungsform werden die Mobilgerät-Kennung und die Schweißgerät-Kennung über eine drahtlose Kommunikationsverbindung mit dem mobilen Kommunikationsgerät empfangen. Bei einer entsprechenden Ausführungsform des Systems ist die Gerätepaarungseinheit zum Empfang der Mobilgerät-Kennung und der Schweißgerät-Kennung über eine drahtlose Kommunikationsverbindung eingerichtet. Dadurch kann ein Nutzer die Gerätepaarung des Schweißgeräts mit dem mobilen Kommunikationsgerät auf einfache Weise mit dem mobilen Kommunikationsgerät vornehmen, indem er zum Beispiel mit dem mobilen Kommunikationsgerät einen Code wie einen QR-Code, in dem die Schweißgerät-Kennung codiert ist, am Schweißgerät scannt und die Schweißgerät-Kennung zusammen mit einer eigenen Kennung des mobilen Kommunikationsgerät als Mobilgerät-Kennung an die Steuereinrichtung übermittelt.

Bei einer weiteren Ausführungsform werden abhängig von den erhaltenen Schweißvorgangs-Daten Nutzerausgabedaten zur Information des Nutzers über den durchzuführenden Schweißvorgang bereitgestellt und die Nutzerausgabedaten werden über eine Kommunikationsverbindung gesendet, insbesondere an das mobile Kommunikationsgerät, oder über eine Nutzerschnittstelle ausgegeben. Bei einer entsprechenden Ausführungsform umfasst das System weiter eine Nutzerausgabeneinheit, die dazu eingerichtet ist, abhängig von den erhaltenen Schweißvorgangs-Daten Nutzerausgabedaten zur Information des Nutzers über den durchzuführenden Schweißvorgang bereitzustellen und das Senden der Nutzerausgabedaten über eine Kommunikationsverbindung mit dem mobilen Kommunikationsgerät oder eine Ausgabe der Nutzerausgabedaten über eine Nutzerschnittstelle zu bewirken. Dadurch kann der Nutzer automatisch über das identifizierte Bauteil und/oder über einen an dem identifizierten Bauteil durchzuführenden Schweißvorgang informiert werden, insbesondere über die Lage und/oder über Schweißparameter des durchzuführenden Schweißvorgangs.

Bei einer weiteren Ausführungsform werden als Nutzerausgabedaten Augmented-Reality-Daten über den durchzuführenden Schweißvorgang bereitgestellt. Bei einer entsprechenden Ausführungsform des Systems ist die Nutzerausgabeneinheit dazu eingerichtet, als Nutzerausgabedaten Augmented-Reality-Daten über den durchzuführenden Schweißvorgang bereitzustellen. Auf diese Weise können dem Nutzer Informationen über einen an dem identifizierten Bauteil durchzuführenden Schweißvorgang intuitiv dargestellt werden, insbesondere die Position bzw. Lage eines Schweißpunkts bzw. einer Schweißnaht. Zu diesem Zweck umfassen die Augmented-Reality-Daten vorzugsweise ein virtuelles Bildelement, das dem in den Bilddaten identifizierten Bauteil lagerichtig zugeordnet ist. Die Augmented-Reality-Daten können beispielsweise Bilddaten enthalten, die von dem mobilen Kommunikationsgerät erhaltenen Bilddaten sowie ein überlagertes virtuelles Bildelement enthalten. Alternativ können die Augmented-Reality-Daten auch das virtuelle Bildelement mit einer Lageinformation zur lagerichtigen Positionierung des virtuellen Bildelements in den von dem mobilen Kommunikationsgerät erhaltenen Bilddaten enthalten, so dass die eigentliche Überlagerung der Bilddaten mit dem virtuellen Bildelement im mobilen Kommunikationsgerät erfolgen kann. Die zuletzt beschriebene Vorgehensweise reduziert den notwendigen Datentransfer zwischen der Steuereinrichtung und dem mobilen Kommunikationsgerät und ermöglicht dadurch eine kürzere Latenzzeit am mobilen Kommunikationsgerät zwischen dem Aufnehmen der Bilddaten und dem Anzeigen der empfangenen Augmented-Reality-Daten.

Bei einer weiteren Ausführungsform umfasst das Bereitstellen der Augmented-Reality-Daten: Erhalten eines virtuellen Modells des in den Bilddaten identifizierten Bauteils, lagerichtiges Zuordnen des virtuellen Modells zu dem in den Bilddaten identifizierten Bauteil, Erhalten einer Lageinformation über die Lage des an dem identifizierten Bauteil durchzuführenden Schweißvorgangs, lagerichtiges Zuordnen eines virtuellen Bildelements zu dem in den Bilddaten identifizierten Bauteil als Funktion der Lageinformation und der Zuordnung des virtuellen Modells zu dem in den Bilddaten identifizierten Bauteil und Erzeugen von Augmented-Reality-Daten als Funktion des lagerichtig zugeordneten virtuellen Bildelements. Bei einer entsprechenden Ausführungsform des Systems ist die Nutzerausgabeneinheit zum Bereitstellen der Augmented-Reality-Daten dazu eingerichtet, ein virtuelles Modell des in den Bilddaten identifizierten Bauteils zu erhalten, das virtuelle Modell lagerichtig zu dem in den Bilddaten identifizierten Bauteil zuzuordnen, eine Lageinformation über die Lage des an dem identifizierten Bauteil durchzuführenden Schweißvorgangs zu erhalten, ein virtuelles Bildelement lagerichtig zu dem in den Bilddaten identifizierten Bauteil als Funktion der Lageinformation und der Zuordnung des virtuellen Modells zu dem in den Bilddaten identifizierten Bauteil zuzuordnen und Augmented-Reality-Daten als Funktion des lagerichtig zugeordneten virtuellen Bildelements zu erzeugen.

Diese Vorgehensweise ermöglicht die Identifizierung verschiedener Bauteile und die lagerichtige Zuordnung virtueller Bildelemente für eine intuitive Augmented-Reality-Darstellung des Bauteils, die der Nutzer beispielsweise direkt auf dem mobilen Kommunikationsgerät, insbesondere auf einem Smartphone, betrachten kann. Durch die Verarbeitungsgeschwindigkeiten moderner Server und die Übertragungsgeschwindigkeiten heutiger Datenverbindungen kann die Darstellung der Augmented-Reality-Daten mit nur geringer Latenz auf dem mobilen Kommunikationsgerät des Nutzers erfolgen, so dass der Nutzer praktisch einen Live-Eindruck der Augmented-Reality-Darstellung erhält.

Das virtuelle Modell kann beispielsweise in Form von 2D- oder 3D-Zeichnungsdaten (z.B. CAD) aus einem Speicher der Steuereinrichtung oder einem externen Speicher erhalten. Bei der lagerichtigen Zuordnung des virtuellen Modells zu dem in den Bilddaten identifizierten Bauteil werden vorzugsweise Betrachtungswinkel bestimmt, die die Richtung anzeigen, aus der die Bilddaten das identifizierte Bauteil zeigen.

Die Identifizierung des Bauteils kann beispielsweise dadurch erfolgen, dass ein in den Bilddaten sichtbarer Code, z.B. ein Barcode, identifiziert und decodiert wird, der eine Bauteil-Kennung enthält. Zusätzlich oder alternativ kann das Bauteil auch über seine Form identifiziert werden, beispielsweise indem für eine Mehrzahl von infrage kommender Bauteile virtuelle Modelle erhalten und mit den Bilddaten abgeglichen werden, zum Beispiel nach einer bildverarbeitungstechnischen Kantenerkennung an den Bilddaten. Zum Abgleichen der ein oder mehreren virtuellen Modelle mit den Bilddaten können die virtuellen Modelle beispielsweise virtuell mit verschiedenen Drehwinkeln rotiert werden, bevor ein eigentlicher Abgleich von Ansichten der virtuellen Modelle unter den verschiedenen Drehwinkeln mit den Bilddaten erfolgt.

Bei dem virtuellen Bildelement kann es sich beispielsweise um ein grafisches Element handelt, insbesondere um einen Pfeil, eine Linie oder einen Punkt, das die Lage des Schweißpunkts bzw. der Schweißnaht anzeigt, die bei dem Schweißvorgang zu erzeugen sind.

Bei einer weiteren Ausführungsform werden abhängig von den erhaltenen Schweißvorgangs-Daten Schweißparameterdaten zur Durchführung des Schweißvorgangs bereitgestellt und die Schweißparameterdaten werden über eine Kommunikationsverbindung an das dem mobilen Kommunikationsgerät gemäß der Gerätepaarungsinformation zugeordnete Schweißgerät gesendet. Bei einer entsprechenden Ausführungsform umfasst das System eine Schweißparametereinheit, die dazu eingerichtet ist, abhängig von den erhaltenen Schweißvorgangs-Daten Schweißparameterdaten zur Durchführung des Schweißvorgangs bereitzustellen und das Senden der Schweißparameterdaten über eine Kommunikationsverbindung mit dem dem mobilen Kommunikationsgerät gemäß der Gerätepaarungsinformation zugeordneten Schweißgerät zu bewirken. Auf diese Weise kann das Schweißgerät automatisch für einen an dem identifizierten Bauteil durchzuführenden Schweißvorgang eingerichtet werden, so dass die Bedienung des Schweißgeräts vereinfacht und Fehler beim Schweißen vermieden werden.

Bei einer weiteren Ausführungsform umfasst das System das Schweißgerät. Das Schweißgerät ist vorzugsweise mit einem Code versehen oder eingerichtet, einen Code anzuzeigen, insbesondere auf einem Bildschirm des Schweißgerät, wobei in dem Code die Schweißgerät-Kennung des Schweißgeräts codiert ist. Dadurch kann das Schweißgerät mit dem mobilen Kommunikationsgerät einfach durch Einscannen des Codes identifiziert und mit diesem gepaart werden.

Bei einer weiteren Ausführungsform umfasst das Erhalten der Schweißvorgangs-Daten über den durchzuführenden Schweißvorgang: Erhalten eines dem identifizierten Bauteil zugeordneten Schweißfolgeplans, der Schweißvorgangs-Daten für mehrere an dem Bauteil in einer vorgegebenen Reihenfolge durchzuführende Schweißvorgänge umfasst, und Auswahl von Schweißvorgangs-Daten aus dem Schweißfolgeplan für einen an dem Bauteil durchzuführenden Schweißvorgang, insbesondere für einen nächsten an dem Bauteil durchzuführenden Schweißvorgang. Bei einer entsprechenden Ausführungsform des Systems ist die Schweißvorgangsdatenerhalteeinheit zum Erhalten der Schweißvorgangsdaten dazu eingerichtet, einen dem identifizierten Bauteil zugeordneten Schweißfolgeplan zu erhalten, der Schweißvorgangs-Daten für mehrere an dem Bauteil in einer vorgegebenen Reihenfolge durchzuführende Schweißvorgänge umfasst, und Schweißvorgangs-Daten aus dem Schweißfolgeplan für einen an dem Bauteil durchzuführenden Schweißvorgang auszuwählen, insbesondere für einen nächsten an dem Bauteil durchzuführenden Schweißvorgang.

Ein Schweißfolgeplan gibt eine Reihenfolge für mehrere nacheinander an einem Bauteil durchzuführende Schweißvorgänge vor. Sind an einem Bauteil mehrere Schweißvorgänge erforderlich, beispielsweise zur Erzeugung mehrerer Schweißnähte, so müssen diese in der Regel in einer bestimmten Reihenfolge vorgenommen werden, damit das Bauteil den vorgegebenen Anforderungen genügt. Wird die Reihenfolge der Schweißvorgänge nicht eingehalten, kann dies zum Beispiel zu einem Verziehen des Bauteils führen.

Die vorzunehmenden Schweißvorgänge können beispielsweise durchnummeriert und/oder durch eine Beschreibung ihrer räumlichen Position am Bauteil festgelegt sein. Entsprechend kann der Schweißfolgeplan zum Beispiel eine Zuordnung enthalten, die den einzelnen Schweißvorgängen am Bauteil eine Nummer entsprechend der vorgegebenen Reihenfolge und/oder eine räumliche Position am Bauteil zuordnet.

Weiterhin gibt der Schweißfolgeplan für die einzelnen Schweißvorgänge vorzugsweise zugehörige Schweißparameter-Sollwerte vor. Auf diese Weise können für ein Bauteil mehrere Sätze von Schweißparameter-Sollwerten vorgegeben werden, so dass das Schweißgerät für die einzelnen Schweißvorgänge jeweils mit den richtigen Schweißparameter-Sollwerten eingestellt werden kann. Sind an einem Bauteil beispielsweise Schweißnähte und Punktschweißungen anzubringen, so ist es denkbar, dass die Schweißnähte andere Schweißparameter-Sollwerte erfordern als die Punktschweißungen. Ebenso kann es erforderlich sein, verschiedene Schweißnähte mit verschiedenen Schweißparameter-Sollwerten zu schweißen.

Vorzugsweise werden Schweißvorgangs-Daten für einen nächsten an dem Bauteil durchzuführenden Schweißvorgang aus dem Schweißfolgeplan ausgewählt. Zu diesem Zweck kann eine Variable, insbesondere ein Zähler, vorgesehen sein, insbesondere in einem Speicher der Steuereinrichtung, deren Wert den nächsten gemäß dem Schweißfolgeplan an dem identifizierten Bauteil durchzuführenden Schweißvorgang identifiziert.

Vorzugsweise enthalten an das mobile Kommunikationsgerät gesendeten Nutzerausgabedaten, insbesondere Augmented-Reality-Daten, Informationen über einen gemäß einem vorgegebenen Schweißfolgeplan an dem identifizierten Bauteil durchzuführenden nächsten Schweißvorgang. Auf diese Weise kann der Bediener intuitiv erkennen, welcher Schweißvorgang an dem identifizierten Bauteil als nächstes durchzuführen ist. Dadurch können Verwechslungen in der Reihenfolge der Schweißvorgänge vermieden werden.

Zusätzlich oder alternativ enthalten an das Schweißgerät gesendete Schweißparameterdaten einen oder mehrere Schweißparameter-Sollwerte für einen gemäß einem vorgegebenen Schweißfolgeplan an dem identifizierten Bauteil durchzuführenden nächsten Schweißvorgang. Auf diese Weise kann das Schweißgerät automatisch für den nächsten folgenden Schweißvorgang eingestellt werden, so dass der Betrieb des Schweißgeräts weiter vereinfacht wird.

Weitere Vorteile und Merkmale des Verfahrens und des Systems ergeben sich aus der nachfolgenden Beschreibung von Ausführungsbeispielen, wobei auf die beigefügte Zeichnung Bezug genommen wird.

In der Zeichnung zeigen
- Fig. 1a-b: ein Ausführungsbeispiel des erfindungsgemäßen Systems in schematischer Darstellung,
- Fig. 2a-b: ein Ausführungsbeispiel des erfindungsgemäßen Verfahrens in Flussdiagrammdarstellung,
- Fig. 3: ein Ausführungsbeispiel für die Identifizierung eines Bauteils in Bilddaten in Flussdiagrammdarstellung,
- Fig. 4: ein Ausführungsbeispiel für die Erzeugung von Augmented-Reality-Daten für ein identifiziertes Bauteils in Flussdiagrammdarstellung,
- Fig. 5: ein Beispiel für von einem mobilen Kommunikationsgerät aufgenommene Bilddaten,
- Fig. 6 - 7: ein Beispiel für ein virtuelles Modell des Bauteils aus den Bilddaten aus Fig. 5 sowie für einen Schweißfolgeplan dafür und
- Fig. 8: ein Beispiel für eine Augmented-Reality-Nutzerausgabe mit den Bilddaten aus Fig. 5.

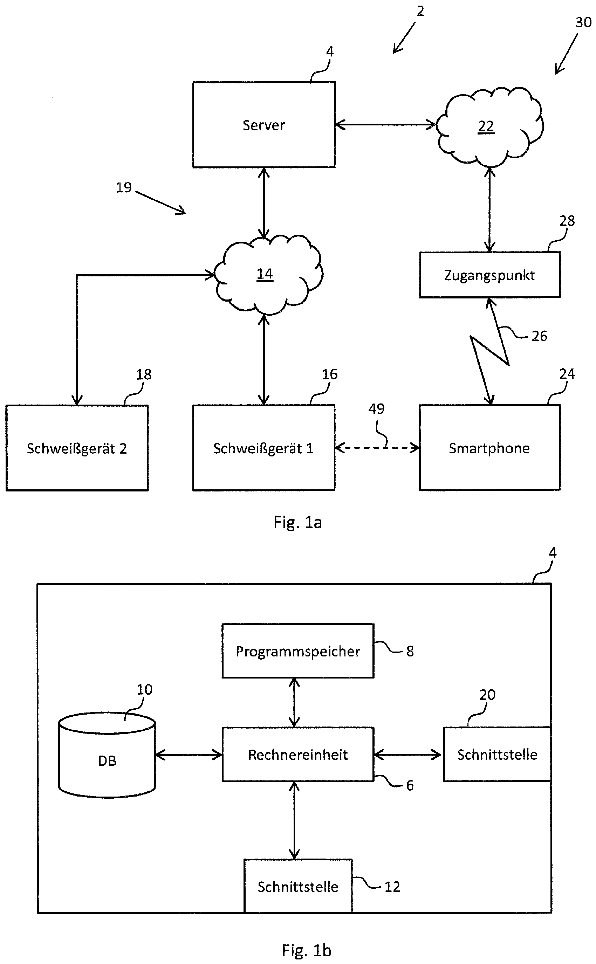

Die Fig. 1a-b zeigt ein Ausführungsbeispiel des erfindungsgemäßen Systems in schematischer Darstellung. Das beispielhafte System 2 umfasst als Steuereinrichtung einen Server 4, dessen möglicher Aufbau schematisch in Fig. 1b illustriert ist.

Der Server 4 weist eine Rechnereinheit 6 mit mindestens einem Mikroprozessor, einen Programmspeicher 8 mit Befehlen und eine Datenbank 10 auf. Weiterhin weist der Server 4 eine erste Datenschnittstelle 12 wie zum Beispiel eine LAN-Schnittstelle auf, über die der Server 4 mit einem lokalen Netzwerk 14 verbunden ist, an das mehrere Schweißgeräte 16, 18 angeschlossen sind. Auf diese Weise wird eine Kommunikationsverbindung 19 bereitgestellt, über die der Server 4 Daten an die Schweißgeräte 16, 18 senden kann.

Weiterhin weist der Server eine zweite Datenschnittstelle 20 auf, über die der Server 4 mit dem Internet 22 verbunden ist. Über das Internet 22 kann der Server 4 Daten von einem mobilen Kommunikationsgerät 24, beispielsweise einem Smartphone, empfangen, das mittels einer drahtlosen Mobilfunkverbindung 26 und über einen Zugangspunkt 28 eines Mobilnetzes ebenfalls mit dem Internet 22 verbunden ist. Da die auf diese Weise bestehende Kommunikationsverbindung 30 zwischen dem Server 4 und dem mobilen Kommunikationsgerät 24 zumindest streckenweise drahtlos ist, stellt die Kommunikationsverbindung 30 eine drahtlose Kommunikationsverbindung dar.

Die Kommunikationsverbindung 30 ist nur ein Beispiel für eine mögliche drahtlose Kommunikationsverbindung. Alternativ kann der Server 4 mit der Datenschnittstelle 20 auch an einen WLAN-Zugangspunkt angeschlossen sein, mit dem das mobile Kommunikationsgerät 24 über eine drahtlose Netzwerkverbindung kommunikationstechnisch verbindbar ist.

Zur Steuerung des Systems 2 ist auf dem Programmspeicher 8 des Servers 4 ein Computerprogramm gespeichert. Die Ausführung des Computerprogramms auf der Rechnereinheit 6 des Servers 4 bewirkt die Durchführung eines Verfahrens zum Erhalten von Schweißvorgangs-Daten.

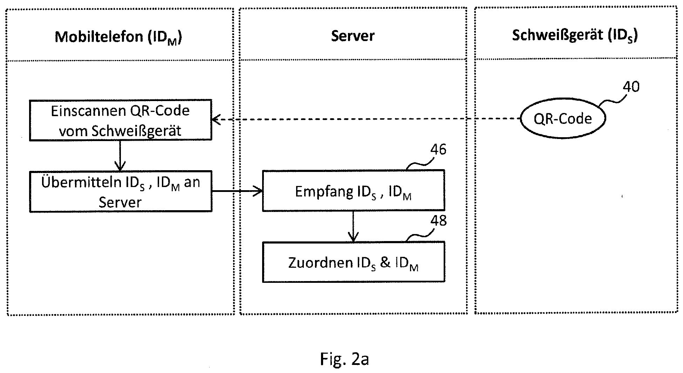

Ein Ausführungsbeispiel für ein solches Verfahren wird im Folgenden anhand der Figuren 2a-b beschrieben:

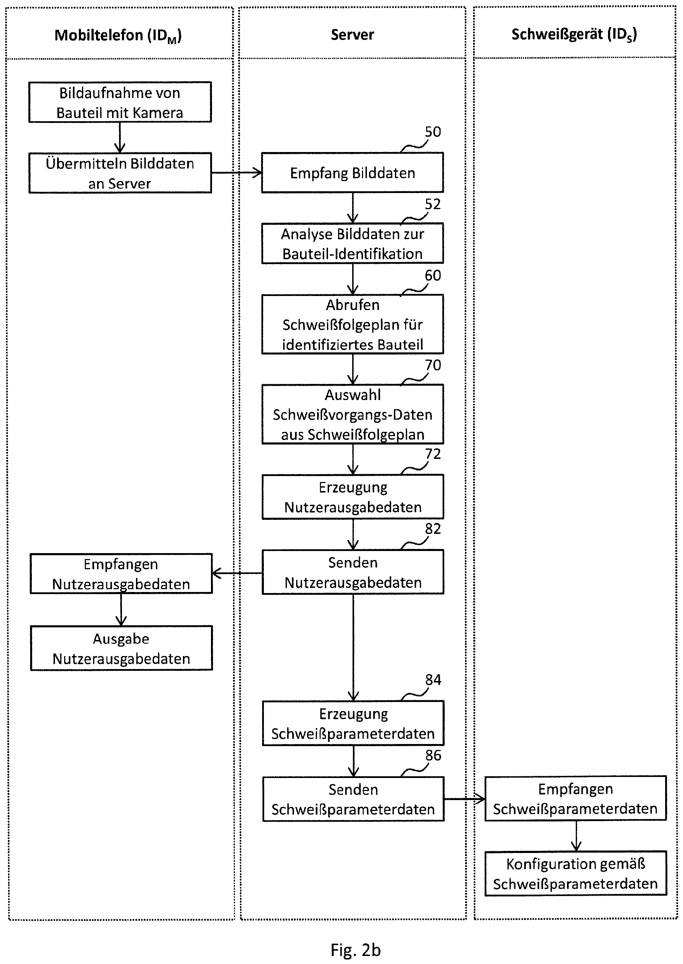

Die Fig. 2a-b zeigen ein Ausführungsbeispiel des erfindungsgemäßen Verfahrens in Flussdiagrammdarstellung. Fig. 2a zeigt einen ersten Teil des Verfahrens zur Paarung des mobilen Kommunikationsgeräts 24 und eines Schweißgeräts (z.B. des Schweißgeräts 16). Fig. 2b zeigt einen zweiten Teil des Verfahrens, bei dem Schweißvorgangs-Daten für das Schweißgerät 16 erhalten werden.

Der erste Teil des Verfahrens wird dadurch ausgelöst, dass ein Benutzer mit dem mobilen Kommunikationsgerät 24 einen am Schweißgerät 16 angebrachten oder auf einem Bildschirm des Schweißgeräts 16 abrufbaren Code 40 einscannt, in dem die Schweißgerät-Kennung IDs des Schweißgeräts 16 codiert ist. Bei dem Code 40 kann es sich zum Beispiel um einen Bar- oder QR-Code handeln.

Das mobile Kommunikationsgerät 24 decodiert die Schweißgerät-Kennung IDs aus dem gescannten Code und übermittelt diese zusammen mit einer Mobilgerät-Kennung ID_{M} des mobilen Kommunikationsgeräts 24 über die drahtlose Kommunikationsverbindung 30 an den Server 4.

Der Server 4 empfängt die Schweißgerät-Kennung ID_{S} und die Mobilgerät-Kennung ID_{M} (Schritt 46) und ordnet die Kennungen einander zu (Schritt 48), beispielsweise indem die Schweißgerät-Kennung IDs und die Mobilgerät-Kennung ID_{M} in einer gemeinsamen Datenstruktur wie zum Beispiel einem Tupel [ID_{M}, IDs] abgespeichert werden. Ein solches Tupel ist ein Beispiel für eine Gerätepaarungsinformation über die Zuordnung des mobilen Kommunikationsgeräts 24 und des Schweißgeräts 16. Die hierdurch bewirkte Paarung des mobilen Kommunikationsgeräts 24 und des Schweißgeräts 16 ist in Fig. 1a durch den gestrichelten Pfeil 49 illustriert).

Der zweite Teil des Verfahrens wird dadurch ausgelöst, dass ein Benutzer mit der Kamera des mobilen Kommunikationsgeräts 24 Bilddaten von einem Bauteil aufnimmt und das mobile Kommunikationsgerät 24 die Bilddaten über die drahtlose Kommunikationsverbindung 30 an den Server 4 sendet.

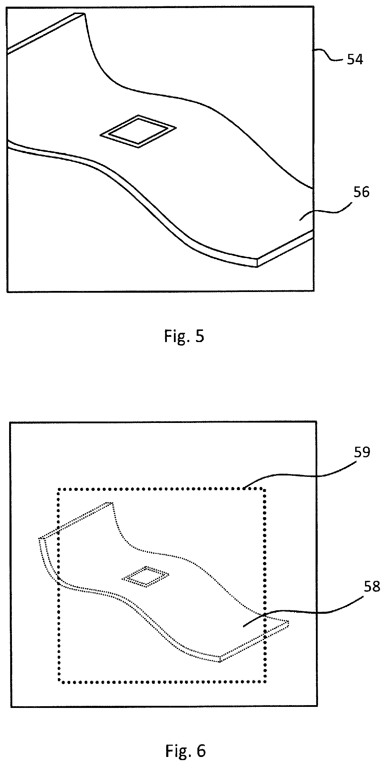

Der Server 4 empfängt die Bilddaten (Schritt 50) und analysiert diese, um ein in den Bilddaten sichtbares Bauteil zu identifizieren (Schritt 52). Fig. 5 zeigt ein Beispiel für empfangene Bilddaten 54 mit einem darin sichtbaren Bauteil 56.

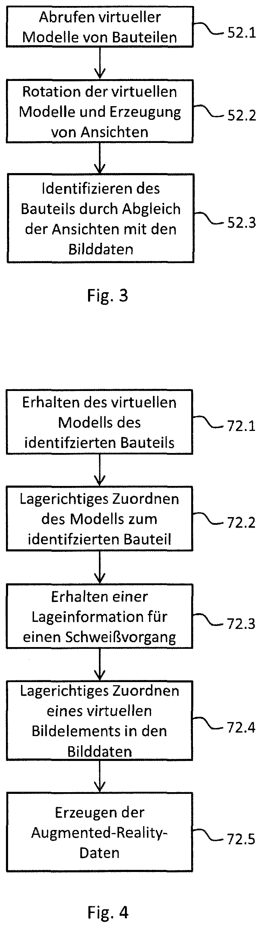

Fig. 3 zeigt eine mögliche Vorgehensweise für den Identifikationsschritts 52 des in den Bilddaten sichtbaren Bauteils. Bei dieser Vorgehensweise werden in einem ersten Unterschritt 52.1 vorgegebene virtuelle Modelle von infrage kommenden Bauteilen aus der Datenbank 10 abgerufen. Bei den virtuellen Modellen kann es sich beispielsweise um dreidimensionale Vektormodelle der Bauteile handeln. Fig. 6 zeigt ein Beispiel für ein virtuelles Vektormodell 58 des Bauteils auf Fig. 5.

In einem zweiten Unterschritt 52.2 werden für die dreidimensionalen Vektormodelle Ansichten aus verschiedenen Richtungen, zum Beispiel durch Rotation der virtuellen Modelle um verschiedene Drehwinkel, und mit verschiedenen Ausschnitten erzeugt.

Im dritten Unterschritt 52.3 werden die verschiedenen Ansichten der verschiedenen Bauteile mit den Bilddaten verglichen, um die Ansicht mit der besten Übereinstimmung mit den Bilddaten zu finden und dadurch das zu der Ansicht zugehörige Bauteil zu identifizieren.

In Fig. 6 ist durch den Rahmen 59 der Ausschnitt der in Fig. 6 gezeigten Ansicht des Vektormodells 58 gezeigt, die am besten mit den Bilddaten 54 übereinstimmt.

Nach der Identifizierung des in den Bilddaten sichtbaren Bauteils wird in Schritt 60 ein vorgegebener Schweißfolgeplan für das identifizierte Bauteil aus der Datenbank 10 abgerufen.

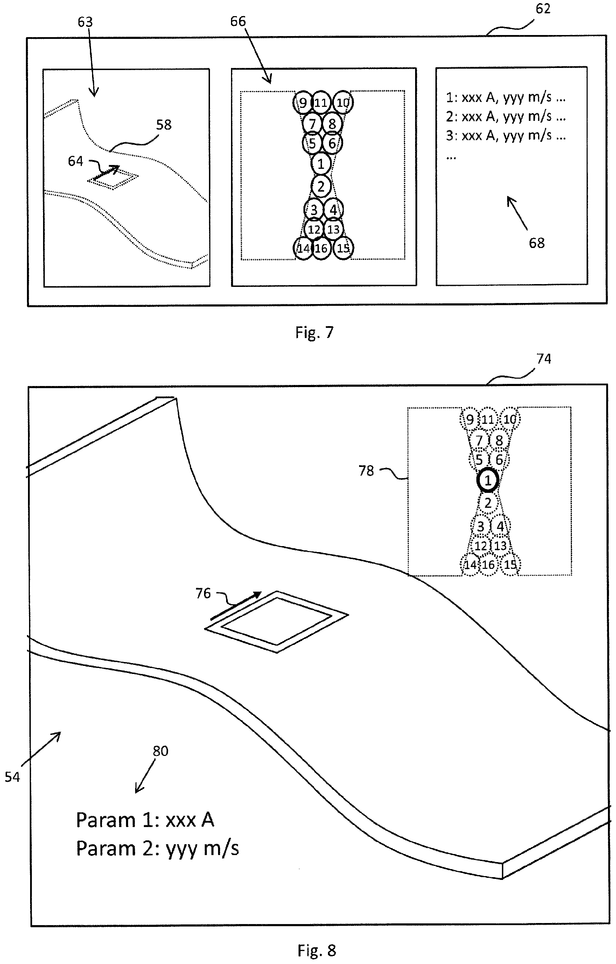

Fig. 7 illustriert ein Beispiel für einen solchen Schweißfolgeplan. Der Schweißfolgeplan 62 enthält Informationen 63 zur Position eines Schweißvorgangs an dem Bauteil 56, die den Verlauf einer Schweißnaht in dem virtuellen Modell 58 des Bauteils 56 umfassen (in Fig. 7 dargestellt durch den Pfeil 64). Weiterhin enthält der Schweißfolgeplan 62 Informationen 66 zur Reihenfolge der einzelnen Schweißraupen 1 bis 15 für die Schweißnaht sowie Informationen 68 zu den für die einzelnen Schweißraupen 1 bis 15 zu verwendenden Schweißparametern (z.B. zum Schweißstrom, zur Schweißdrahtvorschubgeschwindigkeit etc.). Der Schweißfolgeplan 62 enthält im vorliegenden Beispiel damit Informationen zu fünfzehn in einer bestimmten Reihenfolge an dem identifizierten Bauteil 56 durchzuführenden Schweißvorgängen. (Die Platzhalter "xxx", "yyy" in Fig. 7 und auch in Fig. 8 stehen für die entsprechenden Parameter-Werte.)

Im Schritt 70 wird ein nächster an dem identifizierten Bauteil 56 vorzunehmender Schweißvorgang ausgewählt. Zu diesem Zweck kann zum Beispiel aus der Datenbank 10 oder aus einem anderen Speicher des Servers 4 eine dem Schweißfolgeplan 62 zugeordnete Zählvariable ausgelesen werden, deren Wert anzeigt, welcher der im Schweißfolgeplan 62 enthaltenen Schweißvorgänge als nächstes an der Reihe ist. Zu Beginn kann die Zählvariable zum Beispiel den Wert "1" haben, wenn der erste Schweißvorgang durchzuführen ist. Erhält der Server 4 die Information, dass der erste Schweißvorgang durchgeführt wurde, zum Beispiel durch eine Nutzereingabe oder durch eine Rückmeldung vom Schweißgerät 16, so kann der Server den Wert der Zählvariable zum Beispiel auf "2" erhöhen, um anzuzeigen, dass als nächstes der zweite Schweißvorgang an der Reihe ist. Durch die Auswahl eines Schweißvorgangs aus dem Schweißfolgeplan 62 werden Schweißvorgangs-Daten für einen nächsten Schweißvorgang erhalten.

Im nächsten Schritt 72 werden mit den Schweißvorgangs-Daten Nutzerausgabedaten, insbesondere Virtual-Reality-Daten erzeugt.

Fig. 3 zeigt eine mögliche Vorgehensweise für den Erzeugungsschritt 72 der Nutzerausgabedaten. Bei dieser Vorgehensweise wird in einem ersten Unterschritt 72.1 das in der Datenbank 10 gespeicherte virtuelle Modell 58 des identifizierten Bauteils 56 erhalten. Dies kann beispielsweise durch die Auswahl des entsprechenden Modells 58 aus den im Schritt 52.1 aus der Datenbank 10 abgerufenen virtuellen Modellen erfolgen. In Unterschritt 72.2 wird das virtuelle Modell 58 des identifizierten Bauteils 56 dem in den Bilddaten identifizierten Bauteil 56 lagerichtig zugeordnet. Dies kann beispielsweise dazu erfolgen, dass die Drehwinkel und der Ausschnitt des virtuellen Modells 58 verwendet werden, die in Unterschritt 52.2 zur Erzeugung derjenigen Ansicht verwendet wurden, die in Unterschritt 52.3 die beste Übereinstimmung mit den Bilddaten ergab.

In Unterschritt 72.3 werden aus dem Schweißfolgeplan 62 für den ausgewählten nächsten Schweißvorgang (zum Beispiel Schweißraupe "1") Lageinformationen erhalten, insbesondere der Verlauf der Schweißnaht relativ zum Bauteil (Pfeil 64 in Fig. 7) und die Lage der Schweißraupe in der Naht (66 in Fig. 7). Die Lageinformationen zum Verlauf der Schweißnaht können zum Beispiel als Koordinaten in Bezug auf das virtuelle Modell 58 erhalten werden.

In Unterschritt 72.4 wird den Bilddaten dann ein virtuelles Bildelement lagerichtig zugeordnet. Beispielweise kann der Verlauf der Schweißnaht durch eine Linie oder durch einen Pfeil gekennzeichnet werden. Die Positionierung der Linie oder des Pfeils in den Bilddaten erfolgt anhand der Lageinformation der Schweißnaht zum virtuellen Modell 58 und der zuvor vorgenommenen lagerichtigen Zuordnung des virtuellen Modells 58 zu den Bilddaten 54.

Schließlich werden in Unterschritt 72.5 mit dem zuvor lagerichtig zugeordneten virtuellen Bildelement Augmented-Reality-Daten erzeugt, zum Beispiel durch Überlagerung des lagerichtig zugeordneten virtuellen Bildelements mit den Bilddaten.

Fig. 8 zeigt ein Beispiel für auf diese Weise erzeugte Augmented-Reality-Daten. Die Augmented-Reality-Daten 74 umfassen die zuvor erhaltenen Bilddaten 54, die lagerichtig mit einem virtuellen Bildelement, nämlich einem Pfeil 76, der den Verlauf der herzustellenden Schweißnaht anzeigt, überlagert sind. Zusätzlich wird ein weiteres virtuelles Bildelement 78 eingeblendet, das die Position des als nächsten vorzunehmenden Schweißvorgangs (Schweißraupe "1" hervorgehoben) in der Naht anzeigt. Als weiteres virtuelles Bildelement 80 sind Schweißparameter für diesen nächsten vorzunehmenden Schweißvorgang eingeblendet.

Die Augmented-Reality-Daten 74 können als kombinierte Bilddaten erzeugt werden, so dass die Überlagerung der virtuellen Bildelemente mit den Bilddaten auf dem Server 4 erfolgt. Alternativ ist es denkbar, einen Datensatz zu erzeugen, der die einzelnen virtuellen Bildelemente und ihre jeweilige Positionierung relativ zu den Bilddaten enthält, so dass die Überlagerung der virtuellen Bildelemente zum Beispiel auf dem mobilen Kommunikationsgerät 24 erfolgen kann.

In Schritt 82 werden die Nutzerausgabedaten über die drahtlose Kommunikationsverbindung 30 an das mobile Kommunikationsgerät 24 gesendet, so dass diese von dem mobilen Kommunikationsgerät 24 empfangen und auf einem Bildschirm ausgegeben werden können.

Bei dem Ausführungsbeispiel des Verfahrens in Fig. 2b werden in Schritt 84 weiterhin Schweißparameterdaten für den nächsten durchzuführenden Schweißvorgang erzeugt, insbesondere durch Auswahl der im Schweißfolgeplan 62 zu dem nächsten durchzuführenden Schweißvorgang gespeicherten Schweißparameterdaten. Die erzeugten Schweißparameterdaten werden in Schritt 86 an das mit dem mobilen Kommunikationsgerät 24 gekoppelte Schweißgerät 16 gesendet. Dadurch kann das Schweißgerät 16 anhand dieser Schweißparameterdaten automatisch für den nächsten Schweißvorgang eingestellt werden, indem sich das Schweißgerät 16 nach Empfang der Schweißparameterdaten entsprechend konfiguriert.

Das zuvor beschriebene Verfahren erleichtert einem Nutzer in intuitiver Weise die Identifikation eines Bauteils und die Lokalisierung eines daran durchzuführenden Schweißvorgangs, so dass das Schweißen vereinfacht und weniger fehleranfällig wird. Durch die Paarung des mobilen Kommunikationsgeräts mit dem Schweißgerät, können mit dem mobilen Kommunikationsgerät Bilddaten aufgenommen und Augmented-Reality-Daten für einen an dem in den Bilddaten sichtbaren Schweißvorgang betrachtet werden. Durch die Nutzbarkeit praktisch beliebiger mobiler Kommunikationsgeräte wie zum Beispiel des Mobiltelefons des Nutzers, wird die Flexibilität erhöht und das Vorsehen einer Kamera am Schweißgerät entbehrlich. Die automatische Einstellung des Schweißgeräts für das in den Bilddaten identifizierte Bauteil erleichtert die Bedienung weiter und vermeidet Fehleinstellungen.

## Patentansprüche

1. Verfahren zum Erhalten von Schweißvorgangs-Daten, insbesondere ausgeführt durch eine Steuereinrichtung (4) einer Vorrichtung oder eines Systems (2),
- bei dem eine Gerätepaarungsinformation ([ID_{M}, IDs]) über die Zuordnung eines mobilen Kommunikationsgeräts (24), insbesondere eines Mobiltelefons, zu einem Schweißgerät (16, 18), erhalten wird,
- bei dem über eine drahtlose Kommunikationsverbindung (30) mit dem mobilen Kommunikationsgerät (24) Bilddaten (54) empfangen werden,
**dadurch gekennzeichnet,**
- **dass** die empfangenen Bilddaten (54) analysiert werden, um ein in den Bilddaten (54) sichtbares zu schweißendes Bauteil (56) zu identifizieren, und
- **dass** Schweißvorgangs-Daten für einen mit dem Schweißgerät (16, 18) durchzuführenden Schweißvorgang erhalten werden, wobei der Schweißvorgang gemäß einem vorgegebenen Schweißplan (62) an dem identifizierten Bauteil (56) durchzuführen ist.

2. Verfahren nach Anspruch 1,
**dadurch gekennzeichnet, dass** das Erhalten der Gerätepaarungsinformation umfasst:
- Erhalten einer Mobilgerät-Kennung (ID_{M}), die einem mobilen Kommunikationsgerät (24) zugeordnet ist,
- Erhalten einer Schweißgerät-Kennung (IDs), die einem Schweißgerät (16, 18) zugeordnet ist,
- Erzeugen einer Gerätepaarungsinformation ([ID_{M}, IDs]) durch Verknüpfen der Mobilgerät-Kennung (ID_{M}) und der Schweißgerät-Kennung (IDs).

3. Verfahren nach Anspruch 2,
**dadurch gekennzeichnet, dass** die Mobilgerät-Kennung (ID_{M}) und die Schweißgerät-Kennung (IDs) über eine drahtlose Kommunikationsverbindung (30) mit dem mobilen Kommunikationsgerät (24) empfangen werden.

4. Verfahren nach einem der Ansprüche 1 bis 3,
**dadurch gekennzeichnet,**
- **dass** abhängig von den erhaltenen Schweißvorgangs-Daten Nutzerausgabedaten (74) zur Information des Nutzers über den durchzuführenden Schweißvorgang bereitgestellt werden und
- **dass** die Nutzerausgabedaten (74) über eine Kommunikationsverbindung (30) gesendet werden, insbesondere an das mobile Kommunikationsgerät (24), oder über eine Nutzerschnittstelle ausgegeben werden.

5. Verfahren nach Anspruch 4,
**dadurch gekennzeichnet, dass** als Nutzerausgabedaten Augmented-Reality-Daten (74) über den durchzuführenden Schweißvorgang bereitgestellt werden.

6. Verfahren nach Anspruch 5,
**dadurch gekennzeichnet, dass** das Bereitstellen der Augmented-Reality-Daten (74) umfasst:
- Erhalten eines virtuellen Modells (58) des in den Bilddaten (54) identifizierten Bauteils (56),
- lagerichtiges Zuordnen des virtuellen Modells (58) zu dem in den Bilddaten (54) identifizierten Bauteil (56),
- Erhalten einer Lageinformation über die Lage des an dem identifizierten Bauteil (56) durchzuführenden Schweißvorgangs,
- lagerichtiges Zuordnen eines virtuellen Bildelements (76) zu dem in den Bilddaten (54) identifizierten Bauteil (56) als Funktion der Lageinformation und der Zuordnung des virtuellen Modells (58) zu dem in den Bilddaten (54) identifizierten Bauteil (56) und
- Erzeugen von Augmented-Reality-Daten (74) als Funktion des lagerichtig zugeordneten virtuellen Bildelements (76).

7. Verfahren nach einem der Ansprüche 1 bis 6,
**dadurch gekennzeichnet,**
- **dass** abhängig von den erhaltenen Schweißvorgangs-Daten Schweißparameterdaten zur Durchführung des Schweißvorgangs bereitgestellt werden und
- **dass** die Schweißparameterdaten über eine Kommunikationsverbindung (19) an das dem mobilen Kommunikationsgerät (24) gemäß der Gerätepaarungsinformation ([ID_{M}, IDs]) zugeordnete Schweißgerät (16, 18) gesendet werden.

8. Verfahren nach einem der Ansprüche 1 bis 7,
**dadurch gekennzeichnet, dass** das Erhalten der Schweißvorgangs-Daten über den durchzuführenden Schweißvorgang umfasst:
- Erhalten eines dem identifizierten Bauteil (56) zugeordneten Schweißfolgeplans (62), der Schweißvorgangs-Daten für mehrere an dem Bauteil (56) in einer vorgegebenen Reihenfolge durchzuführende Schweißvorgänge umfasst, und
- Auswahl von Schweißvorgangs-Daten aus dem Schweißfolgeplan (62) für einen an dem Bauteil (56) durchzuführenden Schweißvorgang, insbesondere für einen nächsten an dem Bauteil (56) durchzuführenden Schweißvorgang.

9. System (2), umfassend mindestens eine Steuereinrichtung (4),
- mit einer Gerätepaarungseinheit, eingerichtet zum Erhalten einer Gerätepaarungsinformation ([ID_{M}, IDs]) über die Zuordnung eines mobilen Kommunikationsgeräts (24), insbesondere eines Mobiltelefons, zu einem Schweißgerät (16, 18),
- mit einer Empfangseinheit, eingerichtet zum Empfangen von Bilddaten (54) über eine drahtlose Kommunikationsverbindung (30),
**dadurch gekennzeichnet,**
- **dass** das System eine Bildanalyseeinheit, eingerichtet zum Analysieren von der Empfangseinheit empfangener Bilddaten (54), um ein in den Bilddaten (54) sichtbares zu schweißendes Bauteil (56) zu identifizieren, umfasst und
- **dass** das System eine Schweißvorgangsdatenerhalteeinheit, eingerichtet zum Erhalten von Schweißvorgangsdaten für einen mit dem Schweißgerät (16, 18) durchzuführenden Schweißvorgang, der gemäß einem vorgegebenen Schweißplan (62) an dem identifizierten Bauteil (56) durchzuführen ist, umfasst.

10. System nach Anspruch 9,
**dadurch gekennzeichnet, dass** die Gerätepaarungseinheit eingerichtet ist zum
- Erhalten einer Mobilgerät-Kennung (ID_{M}), die einem mobilen Kommunikationsgerät (24) zugeordnet ist,
- Erhalten einer Schweißgerät-Kennung (IDs), die einem Schweißgerät (16, 18) zugeordnet ist und
- Erzeugen einer Gerätepaarungsinformation ([ID_{M}, IDs]) durch Verknüpfen der Mobilgerät-Kennung (ID_{M}) und der Schweißgerät-Kennung (IDs).

11. System nach Anspruch 10,
**dadurch gekennzeichnet, dass** die Gerätepaarungseinheit zum Empfang der Mobilgerät-Kennung (ID_{M}) und der Schweißgerät-Kennung (IDs) über eine drahtlose Kommunikationsverbindung (30) eingerichtet ist.

12. System nach einem der Ansprüche 9 bis 11,
weiter umfassend eine Nutzerausgabeneinheit, die dazu eingerichtet ist,
- abhängig von den erhaltenen Schweißvorgangs-Daten Nutzerausgabedaten (74) zur Information des Nutzers über den durchzuführenden Schweißvorgang bereitzustellen und
- das Senden der Nutzerausgabedaten (74) über eine Kommunikationsverbindung (30) mit dem mobilen Kommunikationsgerät (24) oder eine Ausgabe der Nutzerausgabedaten (74) über eine Nutzerschnittstelle zu bewirken.

13. System nach Anspruch 12,
**dadurch gekennzeichnet, dass** die Nutzerausgabeneinheit dazu eingerichtet ist, als Nutzerausgabedaten Augmented-Reality-Daten (74) über den durchzuführenden Schweißvorgang bereitzustellen.

14. System nach Anspruch 13,
**dadurch gekennzeichnet, dass** die Nutzerausgabeneinheit zum Bereitstellen der Augmented-Reality-Daten (74) dazu eingerichtet ist,
- ein virtuelles Modell (58) des in den Bilddaten (54) identifizierten Bauteils (56) zu erhalten,
- das virtuelle Modell (58) lagerichtig zu dem in den Bilddaten (56) identifizierten Bauteil (54) zuzuordnen,
- eine Lageinformation über die Lage des an dem identifizierten Bauteil (54) durchzuführenden Schweißvorgangs zu erhalten,
- ein virtuelles Bildelement (76) lagerichtig zu dem in den Bilddaten (56) identifizierten Bauteil (54) als Funktion der Lageinformation und der Zuordnung des virtuellen Modells (58) zu dem in den Bilddaten (56) identifizierten Bauteil (54) zuzuordnen und
- Augmented-Reality-Daten (74) als Funktion des lagerichtig zugeordneten virtuellen Bildelements (76) zu erzeugen.

15. System nach einem der Ansprüche 9 bis 14,
weiter umfassend eine Schweißparametereinheit, die dazu eingerichtet ist,
- abhängig von den erhaltenen Schweißvorgangs-Daten Schweißparameterdaten zur Durchführung des Schweißvorgangs bereitzustellen und
- das Senden der Schweißparameterdaten über eine Kommunikationsverbindung (19) mit dem dem mobilen Kommunikationsgerät (24) gemäß der Gerätepaarungsinformation ([ID_{M}, IDs]) zugeordneten Schweißgerät (16,18) zu bewirken.

16. System nach einem der Ansprüche 9 bis 15,
**dadurch gekennzeichnet, dass** die Schweißvorgangsdatenerhalteeinheit dazu eingerichtet ist, zum Erhalten der Schweißvorgangsdaten
- einen dem identifizierten Bauteil (56) zugeordneten Schweißfolgeplan (62) zu erhalten, der Schweißvorgangs-Daten für mehrere an dem Bauteil (56) in einer vorgegebenen Reihenfolge durchzuführende Schweißvorgänge umfasst, und
- Schweißvorgangs-Daten aus dem Schweißfolgeplan (62) für einen an dem Bauteil (56) durchzuführenden Schweißvorgang auszuwählen, insbesondere für einen nächsten an dem Bauteil (56) durchzuführenden Schweißvorgang.

## Claims

1. Method for obtaining welding process data, in particular executed by a control device (4) of a device or a system (2),
- in which a device pairing information ([ID_{M}, IDs]) on the assignment of a mobile communication device (24), in particular a cell phone, to a welding device (16, 18) is obtained,
- in which image data (54) is received via a wireless communication link (30) with the mobile communication device (24),
**characterized**
- **in that** the received image data (54) are analyzed to identify a component (56) to be welded that is visible in the image data (54), and
- **in that** welding operation data for a welding operation to be performed with the welding device (16, 18) are obtained, wherein the welding operation is to be performed on the identified component (56) in accordance with a predetermined welding plan (62).

2. Method according to claim 1,
**characterized in that** obtaining the device pairing information comprises:
- obtaining a mobile device identifier (ID_{M}) assigned to a mobile communication device (24),
- receiving a welding device identifier (IDs) assigned to a welding device (16, 18),
- generating device pairing information ([ID_{M}, IDs]) by linking the mobile device identifier (ID_{M}) and the welding device identifier (IDs).

3. Method according to claim 2,
**characterized in that** the mobile device identifier (ID_{M}) and the welding device identifier (IDs) are received via a wireless communication link (30) with the mobile communication device (24).

4. Method according to any one of claims 1 to 3,
**characterized**
- **in that** user output data (74) for informing the user about the welding process to be performed are provided as a function of the received welding process data, and
- **in that** the user output data (74) is sent via a communication link (30), in particular to the mobile communication device (24), or is output via a user interface.

5. Method according to claim 4,
**characterized in that** augmented reality data (74) about the welding process to be performed are provided as user output data.

6. Method according to claim 5,
**characterized in that** providing the augmented reality data (74) comprises:
- obtaining a virtual model (58) of the component (56) identified in the image data (54),
- assigning the virtual model (58) to the component (56) identified in the image data (54) in correct positional arrangement,
- obtaining position information about the position of the welding operation to be performed on the identified component (56),
- assigning, in correct positional arrangement, a virtual image element (76) to the component (56) identified in the image data (54) as a function of the position information and the assignment of the virtual model (58) to the component (56) identified in the image data (54), and
- generating augmented reality data (74) as a function of the virtual image element (76) being assigned in correct positional arrangement.

7. Method according to any one of claims 1 to 6,
**characterized**
- **in that** welding parameter data for performing the welding process are provided as a function of the welding process data obtained, and
- **in that** the welding parameter data is sent to the welding device (16, 18) assigned to the mobile communication device (24) according to the device pairing information ([ID_{M}, IDs]) via a communication link (19).

8. Method according to any one of claims 1 to 7,
**characterized in that** obtaining the welding operation data about the welding operation to be performed comprises:
- obtaining a weld sequence plan (62) associated with the identified component (56), the weld sequence plan comprising weld operation data for a plurality of weld operations to be performed on the component (56) in a predetermined sequence; and
- selecting welding operation data from the welding sequence plan (62) for a welding operation to be performed on the component (56), in particular for a next welding operation to be performed on the component (56).

9. System (2) comprising at least one control device (4),
- having a device pairing unit configured to obtain device pairing information ([ID_{M}, IDs]) about the assignment of a mobile communication device (24), in particular a cellular phone, to a welding device (16, 18),
- having a receiving unit configured to receive image data (54) via a wireless communication link (30),
**characterized**
- **in that** the system comprises an image analysis unit configured to analyze image data (54) received by the receiving unit in order to identify a component (56) to be welded which is visible in the image data (54), and
- **in that** the system comprises a welding operation data obtaining unit configured to obtain welding operation data for a welding operation to be performed with the welding apparatus (16, 18), which welding operation is to be performed on the identified component (56) according to a predetermined welding plan (62).

10. System according to claim 9,
**characterized in that** the device pairing unit is configured
- to obtain a mobile device identifier (ID_{M}) assigned to a mobile communication device (24),
- to obtain a welding device identifier (IDs) assigned to a welding device (16, 18), and
- to generate device pairing information ([ID_{M}, IDs]) by linking the mobile device identifier (ID_{M}) and the welding device identifier (IDs).

11. System according to claim 10,
**characterized in that** the device pairing unit is configured to receive the mobile device identifier (ID_{M}) and the welding device identifier (IDs) via a wireless communication link (30).

12. System according to any one of claims 9 to 11,
further comprising a user output unit configured
- to provide user output data (74) for informing the user about the welding process to be performed as a function of the welding process data received, and
- to cause the user output data (74) to be sent via a communication link (30) with the mobile communication device (24) or to cause the user output data (74) to be output via a user interface.

13. System according to claim 12,
**characterized in that** the user output unit is configured to provide augmented reality data (74) about the welding process to be performed as user output data.

14. System according to claim 13,
**characterized in that** the user output unit, for providing the augmented reality data (74), is configured
- to obtain a virtual model (58) of the component (56) identified in the image data (54),
- to assign the virtual model (58) to the component (54) identified in the image data (56) in correct positional arrangement,
- to obtain position information about the position of the welding operation to be performed on the identified component (54),
- to assign, in correct positional arrangement, a virtual image element (76) to the component (54) identified in the image data (56) as a function of the position information and the assignment of the virtual model (58) to the component (54) identified in the image data (56), and
- to generate augmented reality data (74) as a function of the virtual image element (76) being assigned in correct positional arrangement.

15. System according to any one of claims 9 to 14,
further comprising a welding parameter unit configured
- to provide welding parameter data for performing out the welding process as a function of the welding process data obtained, and
- to effect sending of the welding parameter data via a communication link (19) with the welding device (16, 18) assigned to the mobile communication device (24) according to the device pairing information ([ID_{M}, IDs]).

16. System according to any one of claims 9 to 15,
**characterized in that** the welding operation data obtaining unit, for obtaining the welding operation data, is configured
- to obtain a weld sequence plan (62) assigned to the identified component (56), the weld sequence plan comprising weld operation data for a plurality of weld operations to be performed on the component (56) in a predetermined sequence, and
- to select welding operation data from the welding sequence plan (62) for a welding operation to be performed on the component (56), in particular for a next welding operation to be performed on the component (56).

## Revendications

1. Procédé pour obtenir des données d'opération de soudage, en particulier exécuté par un dispositif de commande (4) d'un dispositif ou d'un système (2),
- dans lequel une information d'appariement d'appareils ([ID_{M}, IDs]) concernant l'association d'un appareil de communication mobile (24), en particulier d'un téléphone mobile, à un appareil de soudage (16, 18) est obtenue,
- dans lequel des données d'image (54) sont reçues via une liaison de communication sans fil (30) avec l'appareil de communication mobile (24),
**caractérisé**
- **en ce que** les données d'image (54) reçues sont analysées afin d'identifier un composant (56) à souder visible dans les données d'image (54), et
- **en ce que** des données d'opération de soudage sont obtenues pour une opération de soudage à effectuer avec l'appareil de soudage (16, 18), l'opération de soudage étant à effectuer au niveau du composant (56) identifié, selon un plan de soudage (62) prédéfini.

2. Procédé selon la revendication 1,
**caractérisé en ce que** l'obtention de l'information d'appariement d'appareils comprend:
- obtenir un identifiant d'appareil mobile (ID_{M}) associé à un appareil de communication mobile (24),
- obtenir un identifiant d'appareil de soudage (IDs) associé à un appareil de soudage (16, 18),
- générer une information d'appariement d'appareils ([ID_{M}, IDs]) en reliant l'identifiant d'appareil mobile (ID_{M}) et l'identifiant d'appareil de soudage (ID_{S}).

3. Procédé selon la revendication 2,
**caractérisé en ce que** l'identifiant d'appareil mobile (ID_{M}) et l'identifiant d'appareil de soudage (IDs) sont reçus via une liaison de communication sans fil (30) avec l'appareil de communication mobile (24).

4. Procédé selon l'une des revendications 1 à 3,
**caractérisé**
- **en ce que**, en fonction des données d'opération de soudage obtenues, des données de sortie utilisateur (74) sont fournies pour informer l'utilisateur de l'opération de soudage à effectuer, et
- **en ce que** les données de sortie utilisateur (74) sont envoyées via une liaison de communication (30), en particulier à l'appareil de communication mobile (24), ou sont émises via une interface utilisateur.

5. Procédé selon la revendication 4,
**caractérisé en ce que** des données de réalité augmentée (74) concernant l'opération de soudage à effectuer sont fournies comme données de sortie utilisateur.

6. Procédé selon la revendication 5,
**caractérisé en ce que** la fourniture des données de réalité augmentée (74) comprend :
- obtenir un modèle virtuel (58) du composant (56) identifié dans les données d'image (54),
- associer en position correcte le modèle virtuel (58) au composant (56) identifié dans les données d'image (54),
- obtenir une information de position concernant la position de l'opération de soudage à effectuer au niveau du composant identifié (56),
- associer en position correcte un élément d'image virtuel (76) au composant (56) identifié dans les données d'image (54) en fonction de l'information de position et de l'association du modèle virtuel (58) au composant (56) identifié dans les données d'image (54) et
- générer des données de réalité augmentée (74) en fonction de l'élément d'image virtuelle (76) associé en position correcte.

7. Procédé selon l'une quelconque des revendications 1 à 6,
**caractérisé**
- **en ce que**, en fonction des données d'opération de soudage obtenues, des données de paramètres de soudage sont fournies pour l'exécution de l'opération de soudage et
- **en ce que** les données de paramètres de soudage sont envoyées via une liaison de communication (19) à l'appareil de soudage (16, 18) associé à l'appareil de communication mobile (24) selon l'information d'appariement d'appareils ([ID_{M}, IDs]).

8. Procédé selon l'une quelconque des revendications 1 à 7,
**caractérisé en ce que** l'obtention des données d'opération de soudage concernant l'opération de soudage à effectuer comprend:
- obtenir un plan de séquence de soudage (62) associé au composant identifié (56), lequel plan de séquence de soudage comprenant des données d'opération de soudage pour une pluralité d'opérations de soudage à effectuer au niveau du composant (56) dans un ordre prédéterminé, et
- sélectionner des données d'opération de soudage à partir du plan de séquence de soudage (62) pour une opération de soudage à effectuer au niveau du composant (56), en particulier pour une opération de soudage prochaine à effectuer au niveau du composant (56).

9. Système (2) comprenant au moins un dispositif de commande (4),
- avec une unité d'appariement d'appareils, configurée pour obtenir une information d'appariement d'appareils ([ID_{M}, IDs]) concernant l'association d'un appareil de communication mobile (24), en particulier d'un téléphone mobile, à un appareil de soudage (16, 18),
- avec une unité de réception, configurée pour recevoir des données d'image (54) via une liaison de communication sans fil (30),
**caractérisé**
- **en ce que** le système comprend une unité d'analyse d'image, configurée pour analyser des données d'image (54) reçues par l'unité de réception, afin d'identifier un composant (56) à souder visible dans les données d'image (54), et
- **en ce que** le système comprend une unité d'obtention de données d'opération de soudage, configurée pour obtenir des données d'opération de soudage pour une opération de soudage à exécuter avec l'appareil de soudage (16, 18), qui est, conformément à un plan de soudage prédéterminé (62), à exécuter au niveau du composant identifié (56).

10. Système selon la revendication 9,
**caractérisé en ce que** l'unité d'appariement d'appareils est configurée pour
- obtenir un identifiant d'appareil mobile (ID_{M}) associé à un appareil de communication mobile (24),
- obtenir un identifiant d'appareil de soudage (IDs) associé à un appareil de soudage (16, 18), et
- générer des informations d'appariement d'appareils ([ID_{M}, IDs]) en reliant l'identifiant d'appareil mobile (ID_{M}) et l'identifiant d'appareil de soudage (IDs).

11. Système selon la revendication 10,
**caractérisé en ce que** l'unité d'appariement d'appareils est configurée pour recevoir l'identifiant d'appareil mobile (ID_{M}) et l'identifiant d'appareil de soudage (IDs) via une liaison de communication sans fil (30).

12. Système selon l'une quelconque des revendications 9 à 11,
comprenant en outre une unité de sortie utilisateur configurée pour,
- en fonction des données d'opération de soudage obtenues, fournir des données de sortie utilisateur (74) pour informer l'utilisateur de l'opération de soudage à effectuer, et
- envoyer des données de sortie utilisateur (74) via une liaison de communication (30) avec l'appareil de communication mobile (24) ou provoquer une émission des données de sortie utilisateur (74) via une interface utilisateur.

13. Système selon la revendication 12,
**caractérisé en ce que** l'unité de sortie utilisateur est configurée pour fournir, en tant que données de sortie utilisateur, des données de réalité augmentée (74) concernant l'opération de soudage à effectuer.

14. Système selon la revendication 13,
**caractérisé en ce que** l'unité de sortie utilisateur configurée pour fournir les données de réalité augmentée (74) est configurée pour
- obtenir un modèle virtuel (58) du composant (56) identifié dans les données d'image (54),
- associer le modèle virtuel (58) en position correcte au composant (54) identifié dans les données d'image (56),
- obtenir une information de position concernant la position de l'opération de soudage à effectuer au niveau du composant identifié (54),
- associer un élément d'image virtuel (76) en position correcte au composant (54) identifié dans les données d'image (56) en fonction de l'information de position et de l'association du modèle virtuel (58) avec le composant (54) identifié dans les données d'image (56) et
- générer des données de réalité augmentée (74) en fonction de l'élément d'image virtuelle (76) associé en position correcte.

15. Système selon l'une quelconque des revendications 9 à 14,
comprenant en outre une unité de paramètres de soudage configurée pour,
- en fonction des données d'opération de soudage obtenues, fournir des données de paramètres de soudage pour effectuer l'opération de soudage, et
- provoquer l'envoi des données de paramètres de soudage via une liaison de communication (19) avec l'appareil de soudage (16, 18) associé à l'appareil de communication mobile (24) selon l'information d'appariement d'appareils ([ID_{M}, IDs]).

16. Système selon l'une quelconque des revendications 9 à 15,
**caractérisé en ce que** l'unité d'obtention de données d'opération de soudage, pour obtenir les données d'opération de soudage, est configurée pour
- obtenir un plan de séquence de soudage (62) associé au composant identifié (56), lequel plan de séquence de soudage comprenant des données d'opérations de soudage pour plusieurs opérations de soudage à effectuer au niveau du composant (56) dans un ordre prédéterminé, et
- sélectionner des données d'opérations de soudage à partir du plan de séquence de soudage (62) pour une opération de soudage à effectuer au niveau du composant (56), en particulier pour une opération de soudage prochaine à effectuer au niveau du composant (56).
